# EUROPÄISCHE PATENTSCHRIFT

(11) **EP 4 280 864 B1**
(45) Veröffentlichungstag und Bekanntmachung des Hinweises auf die Patenterteilung: **27.08.2025**
(21) Anmeldenummer: 22700869.5
(22) Anmeldetag: 25.01.2022
(51) Int. Cl.: A01G 17/08

(54) **LAUBHEFTER UND VERFAHREN ZUM AUFRICHTEN UND BINDEN VON TRIEBEN VON IN EINER LINEAREN ZEILE ANGEORDNETEN PFLANZEN**
LEAF TYING MACHINE
PALISSEUSE

(30) Priorität: 25.01.2021 EP 21153244
(43) Veröffentlichungstag der Anmeldung: 29.11.2023
(73) Patentinhaber: Clemens GmbH & Co. KG, Weinbautechnik - Getränketechnik, 54516 Wittlich (DE)
(72) Erfinder: CLEMENS, Patrick, 54516 Wittlich (DE)
(74) Vertreter: Tarvenkorn, Oliver
(86) Internationale Anmeldenummer: PCT/DE2022/100062
(87) Internationale Veröffentlichungsnummer: WO 2022/156861

(56) Entgegenhaltungen:
- ES-A1- 2 795 500
- FR-A1- 2 927 225
- FR-A1- 3 024 326

## Beschreibung

Die vorliegende Anmeldung betrifft einen Laubhefter zum Aufrichten und Binden von Trieben von in einer linearen Zeile angeordneten Pflanzen, mit den Merkmalen des Oberbegriffs des Anspruchs 1, sowie ein Verfahren zum Aufrichten und Binden von Trieben von in einer linearen Zeile angeordneten Pflanzen mit den Merkmalen des Oberbegriffs des Anspruchs 8.

Derartige Laubhefter sind aus dem Stand der Technik von den einschlägigen Herstellern hinlänglich bekannt. Grundsätzlich ist ein Laubhefter dafür vorgesehen, Elemente der Baum- und/oder Reihenkultur, beispielsweise einen Rebstock bei einer Weinbaukultur, durch Aufrichten und Fixieren der Triebe an einem Spalier zu ordnen. Rebstöcke bilden Triebe mit Laub, wobei auch Weintrauben an diesen Trieben wachsen. Die Triebe haben aufgrund ihres Eigengewichts beim Wachstum eine gewisse Neigung in die seitliche Richtung, also quer zu der Längserstreckung der Baum- und/oder Reihenkultur, der sogenannten Zeile, wodurch sich die Weintrauben dann unterhalb der Laubblätter befinden könnten und verschattet werden, was eine Verzögerung im Reifeprozess der Weintrauben hervorrufen kann. Die aufzurichtenden Triebe tragen jedoch noch keine Trauben.

Um diese Verzögerung zu minimieren, werden die Triebe und entsprechend auch das Laub durch Einbringen von Schnurelementen mittels des Laubhefters aufgerichtet und positioniert beziehungsweise fixiert. Dabei sollten die Schnurelemente in Abständen miteinander verbunden werden, um die aufgerichteten Triebe gut zu positionieren. Eine Verbindung der Schnurelemente wird durch das Einbringen eines Verbindungselements wie z. B. einer Klammer mittels einer Verbindungsvorrichtung am Laubhefter erreicht. Dabei sollte beim Verbinden, also dem Heften, Knoten oder Klammern der Schnurelemente, darauf geachtet werden, dass an bestimmten Stellen, wie auf Höhe eines Stickels oder bei einer dichten Belaubung, kein Verbindungsvorgang erfolgt, so dass der Laubhefter und die Rebstöcke nicht beschädigt werden.

Aus der FR 2 927 225 A1 ist bekannt, dass der Verbindungsvorgang zum Verbinden der Schnurelemente manuell von dem Fahrer ausgelöst wird. Dadurch, dass der Fahrer sich jedoch schon auf das Fahren an sich, also die Geschwindigkeit und Position des Fahrzeugs relativ zur Pflanzenreihe stark konzentrieren muss, und zusätzlich durch die richtige Höheneinstellung des Laubhefters beschäftigt ist, kann die Reaktionszeit des Fahrers beim Auslösen des Verbindungsvorgangs weiter beeinträchtigt sein, was dazu führen kann, dass ein Verbindungsvorgang an einer Stelle ausgelöst wird, an welcher dieser nicht erwünscht ist. Dies kann zu Beschädigungen an dem Laubhefter und/oder der Baum- und/oder Reihenkultur führen. Gleiches gilt für die ebenfalls beschriebene Option, dass der Verbindungsvorgang zeitgesteuert in Abhängigkeit von der Traktorgeschwindigkeit ausgelöst wird.

Aus der ES 2795500A1 ist eine Vorrichtung bekannt, welche Hindernisse durch optische Erfassungseinrichtungen erkennen können. Dabei wird das Arbeitsgerät entsprechend angesteuert, um dem Hindernis auszuweichen und führt so zu einer zielgerichteten Handlung an den Reihenkulturen. Die Erfassungseinrichtung ist dafür eingerichtet, Pflanzenteile zu erkennen, welche entfernt werden sollen. Dabei wird die Rebe unter Berücksichtigung von Hindernissen modelliert und die Arbeitsgeräte entsprechend gesteuert. Eine Laubhefterfunktion ist nicht beschrieben.

Es ist daher die Aufgabe der vorliegenden Erfindung, einen Laubhefter derart zu verbessern, dass der Verbindungsvorgang automatisch, aber nur an einer geeigneten Stelle in der Zeile ausgeführt wird.

Weiter ist es Aufgabe der vorliegenden Erfindung, ein Verfahren zum Aufrichten und Binden von Trieben von in einer linearen Zeile angeordneten Pflanzen mittels eines Laubhefters, also zum Durchführen des automatischen Verbindungsvorgangs, bereitzustellen.

Gelöst werden die zugrunde liegenden Aufgaben durch einen Laubhefter mit den Merkmalen des Anspruchs 1 und durch ein Verfahren mit den Merkmalen des nebengeordneten Anspruchs 8.

Kerngedanke der vorliegenden Erfindung ist es, einen Laubhefter zum Bearbeiten von in einer linearen Zeile angeordneten Pflanzen bereitzustellen, insbesondere zum Aufrichten und Binden von Trieben der Baum- und/oder Reihenkultur, die eine Laubwand ausbilden, und zwar durch Einbringen und/oder Führen von mindestens zwei Schnurelementen auf verschiedenen Seiten der Laubwand mittels des Laubhefters. Dabei werden die Pflanzentriebe neu positioniert und durch die Schnurelemente in der neuen Position gehalten. Daher umfasst der Laubhefter in bekannter Weise ein Aufrichtsystem zum Aufrichten der Triebe. Außerdem ist am Laubhefter eine Verbindungsvorrichtung vorgesehen, welche dazu vorgesehen und ausgebildet ist, einen Verbindungsvorgang zum Verbinden der Schnurelemente, insbesondere mittels Verbindungselemente, durchzuführen. Mithilfe einer in geeigneter Weise ausgebildeten Steuerungseinrichtung, kann der Laubhefter den Verbindungsvorgang automatisch durchzuführen.

Dabei kann ein Verbindungsvorgang ein Klammervorgang sein, das heißt, dass die Verbindung der Schnurelemente mittels Klammerelementen durchgeführt ist. Derartige Klammern beziehungsweise Klammerelemente sind aus dem Stand der Technik hinreichend bekannt.

Es ist zu beachten, dass bei dem Laubhefter zwischen einem Drahthefter und einem Einzugshefter zu unterscheiden ist. Hinsichtlich des Einzugshefters wird als Schnurelement ein Stück Schnur, beispielsweise aus Garn aus verschiedenen Materialien, verwendet. Bei einem Drahthefter ist das Schnurelement ein in der Baum- und/oder Reihenkultur beweglich installierter Draht, welche von dem Drahthefter verbunden werden.

Erfindungsgemäß ist es vorgesehen, dass der Verbindungsvorgang zum Verbinden der Schnurelemente automatisch durchgeführt wird, das heißt, dass der Verbindungsvorgang ohne Zutun des Fahrers ausgelöst wird. Der Laubhefter ist also bevorzugt derart ausgebildet, dass der Laubhefter bei einem geeigneten Zeitpunkt und/oder Ort einen Verbindungsvorgang automatisch auslöst.

Denkbar ist auch, dass der Verbindungsvorgang sowohl automatisch als auch manuell ausgelöst werden kann, das heißt, dass der Verbindungsvorgang einerseits unabhängig vom Fahrer ausgelöst werden kann und andererseits manuell durch den Fahrer ausgelöst werden kann, sollte sich dies als dienlich erweisen.

Durch das ganz oder vorwiegend automatische Auslösen und Durchführen des Verbindungsvorgangs kann sich der Fahrer auf die Fahrzeugbewegung und die korrekte Höheneinstellung des Laubhefters an der Pflanzenzeile konzentrieren. Weiter werden inkorrekte Klammerungen vermieden, wodurch die Stillstandszeit, welche bedingt ist durch fehlerhafte Klammerungen, reduziert werden kann, so dass insgesamt eine Erhöhung der Arbeitsleistung möglich ist.

Gemäß einer bevorzugten Ausführungsform ist es vorgesehen, dass der Verbindungsvorgang in regelmäßigen Abständen auslösbar beziehungsweise durchführbar ist. Dies ist abhängig von der Beschaffenheit der Laubwand und Anordnung der Pflanzen in der Zeile.

Ist die Laubwand nicht besonders dicht, beispielsweise zu Beginn der Vegetationsperiode, kann der Verbindungsvorgang in einem vorgebbaren Abstand ausgelöst werden, beispielsweise alle 10 Meter, vorzugsweise mit einem Toleranzbereich von +2 Meter / -2 Meter.

Ist die Laubwand bereits sehr dicht, ist es vorgesehen, den Verbindungsvorgang gezielt auszulösen, und zwar in einem Bereich mit möglichst geringer Laubdichte beziehungsweise in einer Lücke der Laubwand. Denkbar sind auch weitere Bedingungen, beispielsweise ein weiter verkürzter Abstand, welcher kleiner als 10 Meter ist, oder Auslösen des Verbindungsvorgangs nach jedem Stickel oder dergleichen.

Nach der Erfindung ist eine Erkennungseinrichtung vorgesehen, die dazu vorgesehen und ausgebildet ist, eine Lücke in der Laubwand der Baum- und/oder Reihenkultur zu erkennen, wobei der Laubhefter eine Steuereinheit umfasst, welche dazu vorgesehen und ausgebildet ist, bei einer Erkennung der Lücke die Verbindungsvorrichtung derart zu betätigen, dass ein Verbindungsvorgang auf Höhe der Lücke ausgelöst wird. Die Erkennungseinrichtung kann dabei an dem Laubhefter oder an einem Fahrzeug, an welchem den Laubhefter angeordnet und mit welchem der Laubhefter verbunden ist, angeordnet sein.

Die Erkennungseinrichtung weist einen Sensor auf, welcher zum Erkennen der Lücke ausgebildet und vorgesehen ist. Weiter bevorzugt ist der Sensor zum Erkennen des Hindernisses ausgebildet und vorgesehen. Der Begriff der Lücke kann dabei abhängig von der Beschaffenheit der Laubwanddichte definiert werden. Eine Lücke kann beispielsweise definiert sein, dass in einem Erfassungsbereich der Erkennungseinrichtung kein Hindernis, wie etwa Laub, ein Stickel oder dergleichen erkannt wurde. Unter einer Lücke kann auch verstanden werden, dass möglichst wenig Laub in dem Erfassungsbereich vorhanden ist; dies ist besonders bei einer hohen Laubdichte sinnvoll. Eine Lücke kann dabei eine begrenzte Ausdehnung in Höhenrichtung und/oder Längsrichtung aufweisen, beispielsweise 10 cm bis 40 cm. Es ist unerheblich, wie tief die Lücke quer zur Zeile ist, da eine Lücke nur dann erkannt ist, wenn kein Hindernis vorliegt. Denkbar ist, dass die Abmessung in Höhenrichtung sich von der Abmessung in Längsrichtung unterscheidet und entsprechend einen anderen Wertebereich aufweist. Denkbar ist alternativ, dass die Abmessung in Höhenrichtung der Abmessung in Längsrichtung entspricht und entsprechend den gleichen Wertebereich aufweist.

Die Erkennungseinrichtung kann dazu vorgesehen und ausgebildet sein, Hindernisse zu erkennen, um einen Verbindungsvorgang auf Höhe der Hindernisse zu verhindern. Das heißt, dass im optimalen Fall die Erkennungseinrichtung gleichzeitig eine Lücke und ein Hindernis erkennen kann.

Ebenso bevorzugt kann es denkbar sein, dass Hindernisse, welche in ihrer Position fest in der Kultur verbaut sind, vermessen sind, so dass ihre Koordinaten bekannt sind. Beispielsweise können derartige Hindernisse Stickel, weitere Begrenzungen oder dergleichen sein. Die Positionen der Hindernisse können in einer Datenbank hinterlegt sein, wobei die Erkennungseinrichtung auf diese Datenbank zugreifen kann und entsprechend keinen Verbindungsvorgang auslöst, wenn ein derartiges Hindernis in einem Bereich des Laubhefters ist. Dieser Bereich kann toleranzbehaftet sein. Die Positionen dieser Hindernisse können beispielsweise mittels GPS, DGPS, RTK-Vermessung, durch Eingabe von Referenzpunkten, mittels geometrischer Daten durch den Fahrer oder dergleichen festgelegt sein.

Gemäß einer bevorzugten Ausführungsform ist es vorgesehen, dass der Sensor ausgewählt ist aus der Gruppe umfassend einen Ultraschallsensor, einen Radarsensor, ein Kamerasystem, einen Reflexlichtschalter, einen ToF-Sensor (Time Of Flight Sensor) oder jegliche Kombination davon. Diese Sensoren sind für eine Distanzmessung geeignet, wobei jeder weitere Sensor, welcher für die Distanzmessung eingesetzt werden kann, denkbar ist. Durch eine Distanzmessung kann erkannt werden, ob sich in dem jeweiligen Erfassungsbereich der Erkennungseinrichtung beziehungsweise des Sensors ein Objekt befindet oder nicht, beziehungsweise wie dicht die Objekte im Erfassungsbereich vorhanden sind.

Besonders bevorzugt handelt es sich bei dem Sensor um ein Kamerasystem zum Erzeugen einer elektronischen, digitalen Bilddatei. Hierzu ist bevorzugt weiter eine Auswerteinheit zum Auswerten der Daten des Kamerasystems vorgesehen. Weiter bevorzugt ist der Erfassungsbereich des Sensors quer zu der Zeile verlaufend, also im Wesentlichen in einem 90°-Winkel dazu. Denkbar ist auch, dass der Erfassungsbereich in einem anderen Winkel zu der Zeile als 90° verlaufend angeordnet ist, so dass eine Voreilung des Sensorsignals möglich ist und damit der in Fahrtrichtung vor dem Fahrzeug liegende Bereich erfasst wird.

Alternativ handelt es sich bei dem Sensor um einen Ultraschallsensor. Hindernisse bzw. Lücken werden mittels des Ultraschallsensors zuverlässig erkannt.

Es ist grundsätzlich denkbar, dass der Sensor in seiner Funktionsweise durch die nächstgelegene Reihe der Baum- und/oder Reihenkultur gestört wird oder nicht ausreichende Kriterien zur Erkennung einer Lücke vorliegen. Gemäß einer bevorzugten Ausführungsform kann daher vorgesehen sein, dass die Erkennungseinrichtung ein blickdichtes Element umfasst, wobei der Sensor auf einer ersten Seite der Laubwand angeordnet ist und das blickdichte Element auf einer zweiten Seite der Laubwand, dem Sensor gegenüberliegend, angeordnet ist.

Durch das blickdichte Element ist es daher möglich, die störende benachbarte Zeile für den Sensor auszublenden. Ebenso kann das blickdichte Element als Referenz für den Sensor und zur Kalibrierung des Sensors dienen.

Das blickdichte Element kann dabei ein flächiges Element sein, das heißt, dass die Erstreckung in zwei Dimensionen deutlich größer sind als in der dritten Dimension. Bevorzugt sind die Breite und Länge, größer als die Höhe des flächigen Elements. Wichtig ist in Bezug auf Größe und Anordnung des blickdichten Elements, dass der Haupterfassungsbereich des Sensors durch das blickdichte Element abgedeckt ist.

Gemäß einer weiteren besonders bevorzugten Ausführungsform kann es vorgesehen sein, dass die Erkennungseinrichtung, also insbesondere der Sensor, in Bewegungsrichtung des Laubhefters gesehen der Verbindungsvorrichtung vorauseilend angeordnet ist. Damit soll die Lücke rechtzeitig im Voraus erkannt werden, so dass die Verbindung genau an der im Voraus erkannten Position vorgenommen werden kann.

Vorauseilend ist demnach derart zu verstehen, dass die Erkennungseinrichtung in einem ersten Abstand in Bewegungsrichtung vor der Verbindungsvorrichtung angeordnet ist, oder aufgrund der Anstellung der Erkennungseinrichtung, also in einem Winkel dazu, der Verbindungsvorrichtung vorauseilend ist. Ein Vorauseilen ist dahingehend vorteilhaft, dass nicht beim Moment des Erkennens einer geeigneten Stelle zum Auslösen des Verbindungsvorgangs der Verbindungsvorgang ausgelöst werden muss. Durch Verzögerungen im System kann dies so nicht gewährleistet werden. Bei einem Vorauseilen hingegen kann das System entsprechend zeitlich reagieren und den Verbindungsvorgang präzise auslösen.

Ein weiterer Kerngedanke der Erfindung ist es, ein Verfahren zum Aufrichten und Binden von Trieben von in einer linearen Zeile angeordneten Pflanzen mittels eines Laubhefters anzugeben, insbesondere zum Aufrichten und Binden von Trieben der Baum- und/oder Reihenkultur, wobei der Laubhefter ein Aufrichtsystem zum Aufrichten der Triebe und eine Verbindungsvorrichtung umfasst, wobei bei dem Verfahren die Verbindungsvorrichtung automatisch ausgelöst wird.

Die automatische Auslösung kann in verschiedener Weise initiiert werden:
Gemäß einer ersten Ausführungsform eines Verfahrens zum Durchführen eines automatischen Verbindungsvorgangs eines Laubhefters werden die Verbindungspositionen durch ein bilderkennendes System festgelegt, das Lücken in der Laubwand ausmacht und das in diesen Lücken die Verbindung der beidseitigen Schnurelemente durch Knoten, Klammern oder in sonstiger Weise vornimmt. Geeignete Lücken bestehen z. B. am Übergang zwischen Stickeln und benachbarten Pflanzen oder zwischen zwei benachbarten Pflanzen, also insbesondere zwischen zwei Rebstöcken. Diese Verfahrensvariante ist insbesondere für solche Pflanzenanordnungen geeignet, die aufgrund örtlicher Gegebenheiten nicht in einer regelmäßigen Reihenfolge von Stickeln und Pflanzen mit einheitlichen Abständen dazwischen angeordnet sind.

Gemäß einer zweiten Ausführungsform ist vorgesehen, bei modernen Pflanzenkulturen, die meist mit regelmäßigen Abständen zwischen den benachbarten Stickeln wie auch regelmäßigen Abständen der Rebstöcke errichtet sind, ein bestimmtes Muster von Verbindungsvorgängen automatisch zu wiederholen. Ein solches Muster kann in einem in der Steuereinrichtung implementierten Steuerungsprogramm (Software) hinterlegt werden.

Ist ein erster Fixpunkt in der Zeile wie z. B. der erste Stickel vom Fahrer erkannt und befindet sich der Laubhefter oder das Arbeitsfahrzeug auf dessen Höhe, so löst der Fahrer den ersten Heftvorgang aus. Die weiteren Heftvorgänge werden dann in im voraus festgelegten Abständen automatisch ausgelöst, indem der Weg des Arbeitsfahrzeugs ab dem festgelegten Fixpunkt fortwährend gemessen wird, insbesondere durch einen Weggeber am Arbeitsfahrzeug und/oder durch ein GPS-System. Nach Erreichen von im Programmablauf festgelegten Wegstrecken bzw. durch Koordinaten definierte Positionen werden jeweils automatisch weitere Verbindungsvorgänge ausgelöst, z. B. in der Mitte zwischen benachbarten Stickeln sowie jeweils kurz vor und kurz nach einem Stickel.

Um den Programmablauf während der Bearbeitung immer wieder zu kalibrieren, ist es sinnvoll, ein Korrektursignal zu senden, wenn sich eine Markierung am Arbeitsfahrzeug oder am Laubhefter auf Höhe des Stickels befindet. Dieses Korrektursignal kann der Fahrer manuell auslösen.

Vorzugsweise wird dafür ein bildererkennendes System genutzt, das auf die Erkennung linearer Strukturen wie eines Stickels optimiert ist. Dadurch werden die Stickel in der Zeile automatisch erkannt und in Abhängigkeit von der Position des automatisch erkannten Stickels wird die Verbindung der Schnurelemente ausgeführt wird oder es wird die vorher festgelegte Abfolge zum Verbinden durch die Position des erkannten Stickels automatisch nachjustiert.

Dies wird durch die Verwendung einer Kamera erreicht, die einen Sichtbereich vor dem Laubhefter abdeckt, und einer elektronischen Bildauswertungseinrichtung, mit der einfache geometrische Strukturen wie ein Stickel gut automatisch erkennbar sind. Hierbei macht man sich zum einen den Umstand zunutze, dass im Wein- und Gartenbau die Pflanzen in den Zeilen linear angeordnet sind, so dass nur ein linearer Weg verfolgt werden muss, und zum anderen, dass nur gerade, also lineare Stickel verwendet werden, die innerhalb der natürlich gewachsenen, somit chaotischen Ausbildung der Pflanzen gut identifizierbar sind.

Mit der vorteilhaften Weiterbildung des Verfahrens wird sichergestellt, dass der Laubhefter rechtzeitig vor oder nach dem Stickel eine Verbindung durchführt, sodass eine Kollision mit dem Stickel wie auch einem anderen Hindernis sicher vermieden wird.

Der von einer Kamera erfasste Sichtbereich enthält zumindest einen Teil einer Zeile, der sich in Fahrtrichtung vor den beiden Baugruppen des Laubhefters befindet, von welchen während der Bearbeitung je eine auf jeder Seite der Zeile angeordnet ist, um die beiden Schnurelemente miteinander verbinden zu können. Eine oder beide Baugruppen können aber auch selbst im Sichtbereich liegen.

Eine lineare Struktur im Sinne der vorliegenden Erfindung ist bevorzugt, aber nicht notwendigerweise, eine geradlinige Struktur. Es kann auch eine andere Struktur sein, die von den chaotischen Strukturen natürlicher Pflanzentriebe unterscheidbar ist.

Die Erkennung der linearen Struktur kann in der Weise erfolgen, dass diese aufgrund vorher durchgeführter Lerndurchläufe gezielt in dem Bildbereich gesucht, erkannt und nachverfolgt wird.

Möglich ist auch eine indirekte Erkennung dadurch, dass im Bildbereich vorhandene natürliche Strukturen erkannt werden, z. B. bei Pflanzen anhand der Färbung des Blattwerks oder anderer typischer Texturen, und die lineare Struktur durch Invertierung, also durch Herausfiltern aller natürlicher Strukturen aus dem Bild, indirekt bestimmt wird.

Nach einer ersten Option wird die einmal als Stickel erkannte lineare Struktur nachverfolgt, indem auch bei den nachfolgenden Bildaufnahmen, die vom Sichtbereich vor den Bearbeitungsgeräten aufgenommen worden sind, die Analyse auf lineare Strukturen fortgesetzt wird. Durch Vergleich mit den aus vorangegangenen Aufnahmen gewonnenen Daten kann die fortschreitende Lageänderung des Stickels während der Fahrt des Arbeitsfahrzeugs nachverfolgt werden. Sobald die lineare Struktur eine Zielmarke erreicht oder den Bildausschnitt vollständig verlassen hat, kann die Verbindung ausgelöst werden oder der Programmablauf beim Heften automatisch auf den als Fixpunkt erkannten Stickel justiert werden.

Möglich ist weiterhin, die Neigung der als Stickel erkannten linearen Struktur in Bezug auf einen Bildhorizont oder eine andere Bezugsebene zu berechnen, insbesondere deren Seitenneigung in Bezug auf die Längsachse der Pflanzenzeile. Darüber kann ein seitlich schief in der Zeile stehender Stickel erkannt und die erforderlichen Abstände der Heftpunkte vor und nach dem Stickel berechnet werden, um eine Kollision mit dem Stickel auch bei Schrägstellung zu vermeiden. Es kann auch der Fall erkannt werden, dass ein Stickel in Längs- bzw. Zeilenrichtung schiefsteht, nämlich gegen die Fahrtrichtung zurückkippt. In diesem Fall wird durch die Kamera möglicherweise erkannt, dass der obere Abschnitt des Stickels bereits passiert wurde. Jedoch kann der untere Teil immer noch so weit vorstehen, dass es zu einer Kollision mit den Einrichtungen am Laubhefter kommen kann. Daher kann über die Neigungserkennung der Impuls für die Verbindung ggf. hinausgezögert werden.

Die elektronische Kamera ist bevorzugt an einer Traverse der Haltevorrichtung, welche über die Zeile hinweg greift, angeordnet.

Weiterhin bevorzugt ist nach der Erfindung eine seitliche Anbringung, bei der die Kamera versetzt zu der Zeile im Arbeitsgang positioniert ist und senkrecht oder schräg von der Seite auf die Zeile unmittelbar vor den Bearbeitungseinrichtungen blickt, da bei einer seitlichen Anordnung eine größere Ausdehnung der linearen Struktur per Bilderkennung erfassbar ist als bei einer Ansicht von oben. Damit Stickel sicher als lineare Strukturen bei der Bildauswertung erkennbar sind, werden insbesondere bei einer seitlichen Anordnung der Kamera optische Verzerrungen beseitigt, vor allem, wenn die Kamera nur eine kurze Entfernung zu der Pflanzenzeile hat. Um bei dem gegebenen kurzen Abstand einen ausreichend großen Bildbereich erfassen zu können, müssen Objektive mit kleiner Brennweite eingesetzt werden, welche die Verzerrungen verursachen.

Die Verzerrungskorrektur wird vorzugsweise rechnerisch bei der aufgenommenen elektronischen Bilddatei vorgenommen, bevor diese hinsichtlich der Strukturerkennung ausgewertet wird. Dazu wird das aufgenommene Bild von den seitlichen Rändern her, gegebenenfalls auch vom oberen Bildrand und/oder vom unteren Bildrand her konkav gestaucht. Der Stauchungsfaktor kann in einem Kalibrierungsvorgang angepasst werden, während die Kamera auf einen im Sichtbereich befindlichen Stickel gerichtet ist. Dazu wird bei der Kalibrierung zunächst die Ausrichtung der Kamera fest eingestellt und dann das darüber aufgenommene elektronische Bild vor oder während der Bildauswertung für den Bediener angezeigt. Die horizontale und gegebenenfalls vertikale Stauchung kann vom Bediener solange variiert werden, bis der Stickel im Bild als eine lineare Struktur sichtbar ist und durch den in der Steuerungseinrichtung implementierten Bildauswertungsalgorithmus als solche erkannt wird. Auch eine automatisierte Kalibrierung ist möglich, indem der Bediener das Arbeitsgerät so positioniert, dass ein Stickel im Sichtbereich der Kamera ist.

Zur Unterscheidung zwischen den Stickeln, die senkrecht oder in einem spitzen Winkel zur Bodenoberfläche ausgerichtet sind, und den oftmals in den Zeilen und parallel zum Boden verlaufenden Spalierdrähten kann vorgesehen sein, die Breite von erkannten linearen Strukturen zu bestimmen und so zwischen Stickeln und Drähten zu unterscheiden.

Als weiteres Unterscheidungskriterium kann die Neigung herangezogen werden. Beträgt der erkannte Neigungswinkel der linearen Struktur in Bezug auf die Bodenoberfläche mehr als etwa 45°, handelt es sich definitionsgemäß um einen Stickel, während lineare Strukturen, die sich annähernd horizontal im Bildausschnitt befinden, als Drähte oder zu den Drähten gehörende Spannvorrichtungen zu identifizieren sind.

Außerdem können außer den Stickeln, bei denen es sich stets um lineare Strukturen handelt, die bis zum Boden reichen, andere Bildmuster von Hindernissen angelernt werden, so dass diese ebenfalls von der Bilderkennungseinrichtung erkannt werden und ein Steuerimpuls für die Verbindung ausgelöst wird. Solche Hindernisse sind beispielsweise die Spannvorrichtungen für die Spalierdrähte.

Neben der Inline-Erkennung von geeigneten Verbindungspositionen, die während der Durchfahrt des Arbeitsfahrzeugs durch die Zeile mittels Sensoren erkannt und/oder nachjustiert werden, können auch zusätzlich oder alternativ georeferenzierte Informationen aus Datenbanken abgerufen werden, die in der Speichereinheit der Steuerungseinrichtung oder auf einem externen Speichermedium hinterlegt sind, über das mittels einer Datenverbindung online zugegriffen werden kann. Diese Informationen können neben Verbindungs- und Hindernispositionen auch zusätzliche Beschaffenheitsangaben zu den in der jeweiligen Zeile vorhanden Pflanzen beinhalten, um so z. B. in Abhängigkeit vom Pflanzenalter oder Standort automatisch die Anzahl der Verbindungspunkte herab- oder heraufzusetzen.

Die Erfindung wird nachfolgend durch die in den Zeichnungen dargestellten Ausführungsbeispiele näher erläutert. Die Figuren zeigen im Einzelnen:
- Fig. 1: eine perspektivische Ansicht eines Laubhefters aus dem Stand der Technik;
- Fig. 2: eine Rückansicht des Laubhefters nach Fig. 1;
- Fig. 3: einen Laubhefter auf einem Arbeitsfahrzeug in schematischer Darstellung;
- Fig. 4: das Arbeitsfahrzeug zwischen zwei Zeilen eines Weinbergs in schematischer Ansicht von oben;
- Fig. 5, 6: jeweils das Arbeitsfahrzeug an einer Zeile gemäß der Ansicht in Figur 4;
- Fig. 7: ein Blockschaltbild einer Steuerungseinrichtung; und
- Fig. 8: eine Kameraaufnahme.

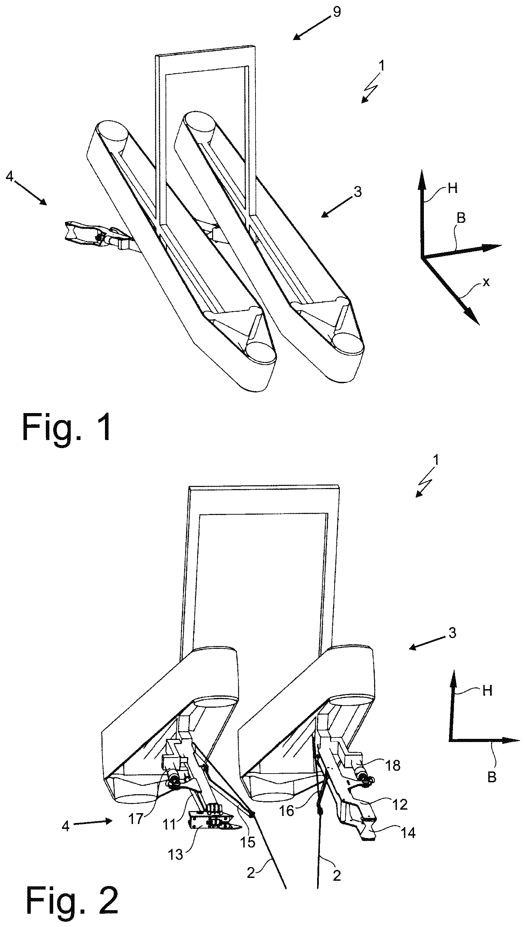

In der Figur 1 ist ein Laubhefter 1 in einer perspektivischen Ansicht von vorn dargestellt, wobei der Laubhefter 1 ein zweiteiliges Aufrichtsystem 3 zum Aufrichten von Trieben der Baum- und/oder Reihenkultur besitzt. Das Aufrichtsystem 3 besitzt endlose, umlaufende Bänder, die in Fahrtrichtung gesehen von vorne unten nach hinten oben ansteigend ausgerichtet sind. Weiterhin umfasst der Laubhefter 1 eine Verbindungsvorrichtung 4. Zudem besitzt der Laubhefter 1 ein Basiselement 9, mit dem er an einem Hubmast 10 eines Arbeitsfahrzeugs angeordnet werden kann. Die U-Form des Basiselements 9, ermöglicht es, dass die gesamte Anordnung mit Aufricht- und Verbindungssystemen oberhalb einer Zeile geführt werden kann, wobei je ein Teil des Aufrichtsystems 3 und der Verbindungsvorrichtung 4 zu jeder Seite der Zeile angeordnet sind.

Der Laubhefter 1 ist in Figur 2 in einer perspektivischen Rückansicht detailliert dargestellt. Die Verbindungsvorrichtung 4 ist dazu vorgesehen und ausgebildet, einen Verbindungsvorgang zum Verbinden von Schnurelementen 2 mittels Verbindungselementen wie z. B. Klammern durchzuführen. Sie umfasst im Wesentlichen:
- einen ersten Verbindungsarm 11 mit einer ersten Schnurelementführung 15 und mit einem Verbindungsautomaten 13,
- einen zweiten Hebelarm 12 mit einer zweiten Schnurelementführung 16 und mit einem Gegenstück 14 zu dem Verbindungsautomaten 13,

Über die Schnurelementführungen 15, 16 werden die Schnurelemente 2 so geführt, dass sie nah beieinander verlaufen und sich unmittelbar im Wirkungsbereich des Verbindungsautomats 13 und des Gegenstücks 14 befinden. Das Gegenstück 14 ist derart geformt, dass über den Verbindungsautomat 13 ein Verbindungselement so eingebracht werden kann, dass die Schnurelemente 2 miteinander verbunden werden können. Der Verbindungsautomat 13 hingegen beinhaltet die Verbindungselemente und ist dazu ausgebildet, die Verbindungselemente auszuwerfen, um in Kombination mit dem Gegenstück 14 die Schnurelemente 2 zu verbinden.

Die Verbindungsarme 11, 12 sind in Breitenrichtung B bewegbar, und zwar sind sie um eine jeweilige Drehachse drehbar, so dass die Verbindungsarme 11, 12 drehbar an dem Aufrichtsystem 3 angeordnet sind. Eine Bewegung der Verbindungsarme 11, 12 wird mittels eines ersten Stellglieds 17 und eines zweiten Stellglieds 18 erreicht, wobei die Stellglieder 17, 18 einerseits gelenkig mit dem Aufrichtsystem 3 und andererseits gelenkig mit dem jeweiligen Verbindungsarm 11, 12 verbunden sind. Bei einer Betätigung des jeweiligen Stellglieds 17, 18 wird dessen Länge verändert, folglich auch der Abstand zwischen seinen beiden Drehpunkten, so dass der jeweilige Verbindungsarm 11, 12 um seine jeweilige Drehachse gedreht wird.

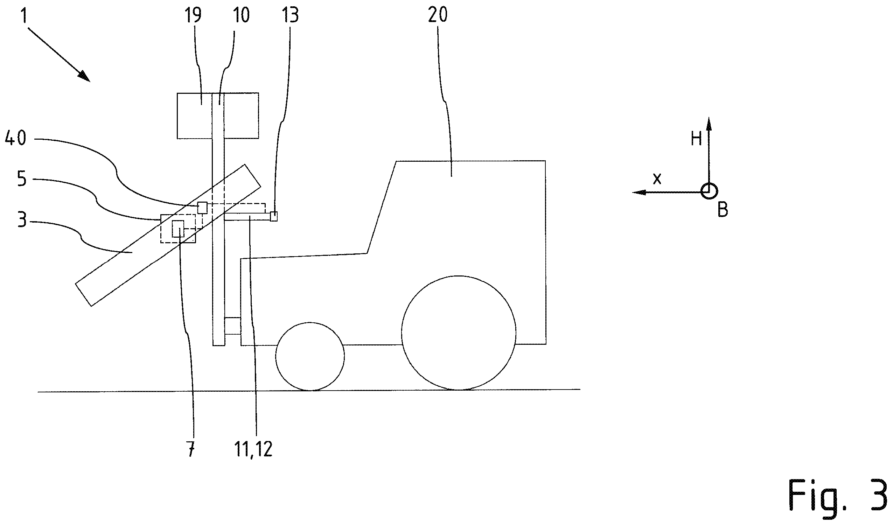

In der Figur 3 ist der Laubhefter 1 nochmals in einer schematischen Darstellung dargestellt. So sind in der Figur 3 die Erkennungseinrichtung 5 mit einem Sensor 7 und die Steuereinheit 40 dargestellt, wobei bevorzugt die Erkennungseinrichtung 5 in Längsrichtung x gesehen vor der Verbindungsvorrichtung 4 und insbesondere vor deren Verbindungsautomat 13 angeordnet ist. Allgemein kann die Längsrichtung x als die Bewegungsrichtung eines Arbeitsfahrzeugs 20 verstanden werden, an dem der Laubhefter 1 angebracht ist. Die Verbindung des Laubhefters 1 zum Arbeitsfahrzeug 20 erfolgt über einen Hubmast 10, durch den der Laubhefter 1 in der Höhe gegenüber dem Untergrund anpassbar ist. Ein Behälter 19 ist vorgesehen, welcher einen Vorrat an Schnurelementen 2 beinhaltet.

Die Steuereinheit 40 steht mit der Erkennungseinrichtung 5 zumindest in signaltechnischer Verbindung, wobei die Daten des Sensors 7 an die Steuereinheit 40 übermittelt werden können. Die erhaltenen Daten des Sensors 7 werden dann in der Steuereinheit 40 weiter derart verarbeitet, dass eine Auslösung des Verbindungsvorgangs initiiert wird, wenn eine entsprechende Lücke erkannt worden ist. Zur Ansteuerung beziehungsweise zur Auslösung des Verbindungsvorgangs steht die Steuereinheit 40 zumindest signaltechnisch mit dem ersten Stellglied 17 und dem zweiten Stellglied 18 in Verbindung, um eine Längenänderung der Stellglieder 17, 18 hervorzurufen.

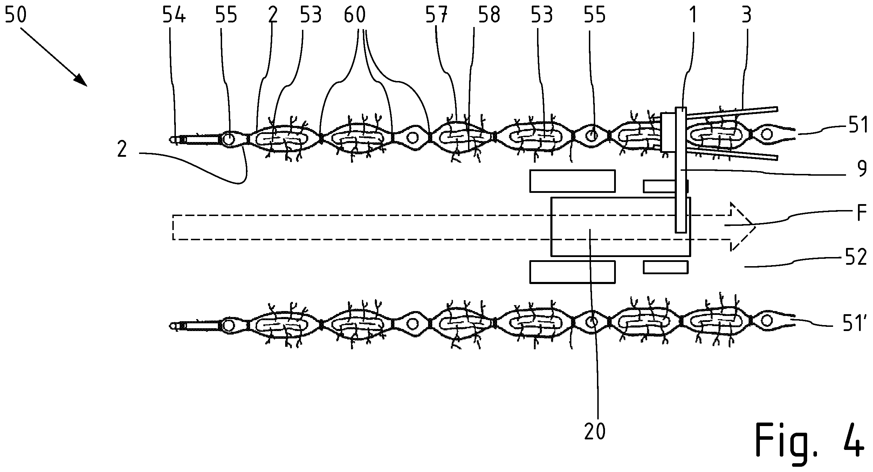

Anhand der nachfolgenden Figuren 4 bis 6 wird eine bevorzugte Ausführungsform des erfindungsgemäßen Verfahrens näher erläutert.

In Figur 4 sind schematisch von oben zwei Zeilen 51, 51' eines Weinbergs 50 mit einem dazwischen liegenden Arbeitsgang 52 dargestellt. Eine Vielzahl von Rebstöcken 53 steht in linearen Anordnungen, die jeweils eine Zeile 51, 51' bilden. In jeder Zeile 51, 51' stehen vertikal ausgerichtete Pfähle, sogenannte Stickel 55. Am Zeilenanfang bzw. -ende befindet sich jeweils ein weiterer, schräg stehender Stickel 54, über den die Vorspannung auf die zwischen den Stickeln 55 gespannten Drahtspaliere aufgebracht wird.

Das Arbeitsfahrzeug 20 mit dem Laubhefter 1 fährt in Fahrtrichtung F, die gleich zur Längsrichtung x der Zeile ist, in dem Arbeitsgang 52 und bearbeitet die Zeile 51 links vom Fahrzeug 20. Mittels der Aufrichtsysteme 3 des Laubhefters 1 werden aus der Zeile 51 herausragende Triebe von beiden Seiten nach innen geführt. Von außen wird auf beiden Seiten der Zeile 51 durch den Laubhefter 1 zugleich jeweils ein Schnurelement 2 gezogen, so dass die Triebe, wenn sie nach dem Passieren des Laubhefters 1 wieder ausfedern, an den Schnurelementen 2 zurückgehalten werden. Durch das Verbinden der beidseits der Zeile 51 laufenden Schnurelemente 2 an den Verbindungspositionen 60 wird erreicht, dass die Schnurelemente 2 nah beieinander und damit nah an den Rebstöcken 3 und an den Drahtspalieren der Zeile 51 gehalten sind.

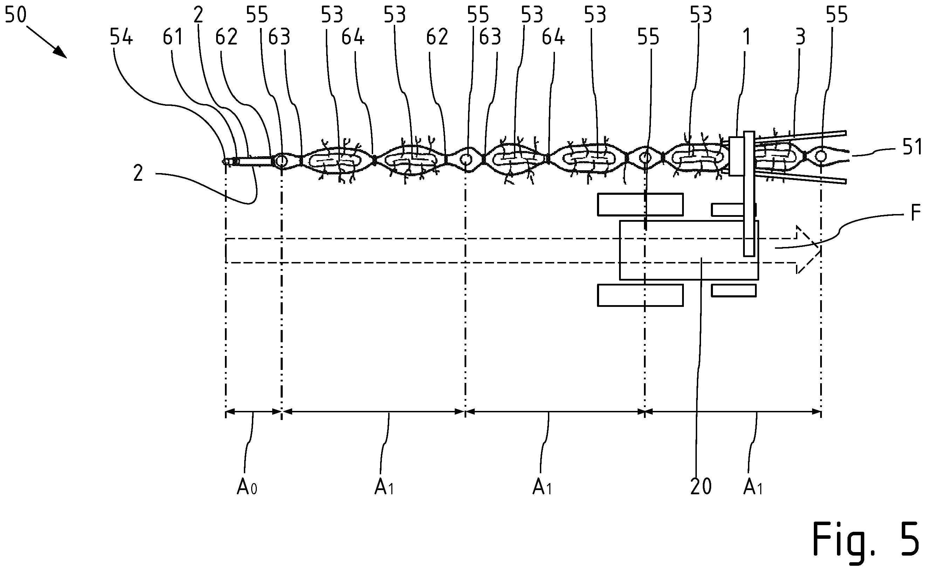

In Figur 5 ist die gleiche Zeile 51 wie in Fig. 4 gezeigt, und auch das Arbeitsfahrzeug 20 befindet sich an der gleichen Position. Mit den strichpunktierten Linien ist die Fahrstrecke F in mehrere Abschnitte mit unterschiedlichen Längen A unterteilt.

Nach einer Anfangsstrecke mit dem Abstand A₀ zwischen dem schräg stehenden Stickel 54 am Anfang und dem ersten vertikalen Stickel 55 beginnen mehrere gleichartige Abschnitte, die sich jeweils zwischen zwei benachbarten Stickeln 55 erstrecken und jeweils einen Abstand A₁ zueinander haben. Diese Abstände A₁ wurden beim Errichten der Zeilen 51, 51' festgelegt. Sie sind daher bekannt oder ausmessbar und bleiben unveränderlich. Diese bekannten Abstände werden genutzt, um für die jeweilige Zeile 51, 51' eine Verbindungsfolge mit mehreren Verbindungspositionen 60 als Programm zu erstellen, das in der Steuereinrichtung gespeichert wird.

Zu Beginn der Fahrtstrecke F werden die beiden Schnurelemente 2 am Anfangsstickel 54 befestigt. Der Anfangsstickel 54 dient als Referenzmarke für den Start des Programms.

Beim Anfangsstickel 54 wird mittels des Laubhefters 1 eine erste Basisverbindung der Schnurelemente 2 an einer Basisverbindungsposition 61 hergestellt. Kurz vor dem ersten vertikalen Stickel 5 erfolgt eine Verbindung an einer Vor-Stickel-Verbindungsposition 62 und dahinter an einer Nach-Stickel-Verbindungsposition 63. Im dargestellten Ausführungsbeispiel des Verfahrens ist außerdem eine Zwischen-Stickel-Verbindungsposition 64 vorgesehen, bei der eine Lücke zwischen den Rebstöcken 53 genutzt wird.

Danach beginnt das gleiche Muster von Verbindungen an den Verbindungspositionen 62 .. 64 erneut. Durch eine Bedienereingabe der Abstände A₀ und A₁ wird das Steuerungssystem in die Lage versetzt, die Positionen für die wiederkehrenden Verbindungen 62 ... 64 selbsttätig auszurechnen, in einer Speichereinheit zwischenzuspeichern und am vorgesehenen Ort in der Zeile 51 auszuführen.

Dazu werden z. B. die Vor- und Nach-Stickel-Verbindungspositionen 62, 63 jeweils mit gleichem Abstand zum Stickel 55 an gegenüberliegenden Seiten davon gesetzt. Die Distanz zum Stickel 55 ist als Parameter in der Speichereinheit der Steuerungseinrichtung hinterlegt, so dass die Verbindungspositionen 62, 63 automatisch ausgerechnet werden. Der Wert für die Distanz kann durch Bedienereingriff verändert werden.

Ebenfalls kann der Bediener die Anzahl der Zwischen-Stickel-Verbindungspositionen 64 festlegen. In dem in Figur 5 gezeigten Ausführungsbeispiel ist eine Zwischen-Stickel-Verbindungsposition 64 in der Mitte zwischen zwei benachbarten Stickeln 55 festgelegt.

Ist diese Abfolge von Verbindungspositionen 61 ... 64 einmal programmiert und in der Speichereinheit der Steuerungseinrichtung hinterlegt, kann beim Durchfahren des Arbeitsfahrzeugs 20 durch den Arbeitsgang 52 zwischen den Zeilen 51 ein automatisiertes Verfahren durchgeführt werden, durch das die Verbindungspositionen 61 .. 64 automatisch angefahren werden und an den vorgesehenen Stellen jeweils eine Verbindung zwischen den beiden Schnurelementen 2 hergestellt wird.

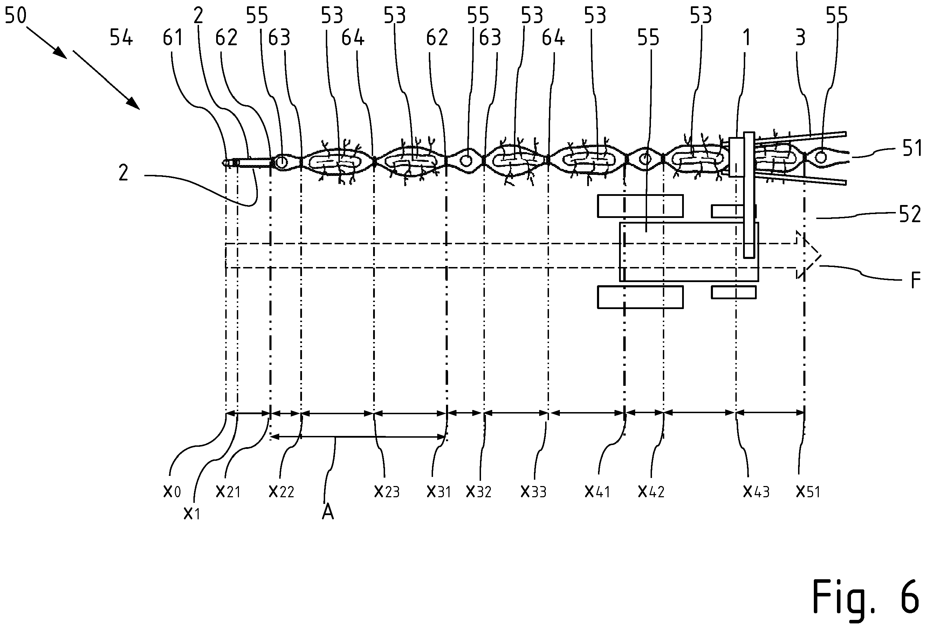

Das programmierte Muster der Verbindungen ist in Figur 6 wiedergegeben, wobei die Abbildung der oberen Zeile 51 im Übrigen unverändert zur Darstellung in den Figuren 4 und 5 ist. Der Verlauf der Fahrtstrecke F entlang der Zeile 51 ist hier als x-Koordinate definiert.

An einem Startpunkt x₀ wird durch den Bediener oder durch einen Sensor am Laubhefter ein Startsignal ausgegeben, um die Sequenz zu initiieren und die Abfolge von Verbindungspositionen während der Durchfahrt des Arbeitsfahrzeugs 20 mit dem Laubhefter 1 durch den Arbeitsgang 52 automatisch abzuarbeiten:
- Bei x₁ ist die Startverbindungsposition 61.
- Bei x₂₁ und x₂₂ werden die Verbindungen an den Vor- und Nach-Stickel-Verbindungpositionen 62, 63 ausgeführt.
- Die Zwischen-Stickel-Verbindungposition 64 ist bei x₂₃.

Danach wiederholt sich die Abfolge der Verbindungspositionen 62, 63, 64 immer wieder und endet schließlich an der einer Zeilenende-Position, die zur Startverbindungsposition 61 korrespondiert, aber hier nicht gezeichnet ist. Gleichartige Verbindungen erfolgen an Verbindungspositionen mit den Koordinaten x₃₁, x₃₂, x₃₃ bzw. x₄₁, x₄₂, x₄₃ usw., die jeweils um den Abstand L zu der korrespondierenden Verbindungsposition in der jeweils vorhergehenden Sequenz versetzt sind.

Für die Zwischen-Stickel-Verbindungsposition 64 kann ergänzend die oben beschriebene Lückenerkennung eingesetzt werden. In diesem Fall dienen die vorprogrammierte Positionen x₂₃, x₃₃, x₄₃ für die Zwischen-Stickel-Verbindungsposition 64 nur als Triggerpunkt für die Lückenerkennung, das heißt, die automatische Lückenerkennung ist ab diesem Punkt aktiviert und löst dann selbsttätig bei der nächstfolgenden erkannten Lücke eine Verbindung aus.

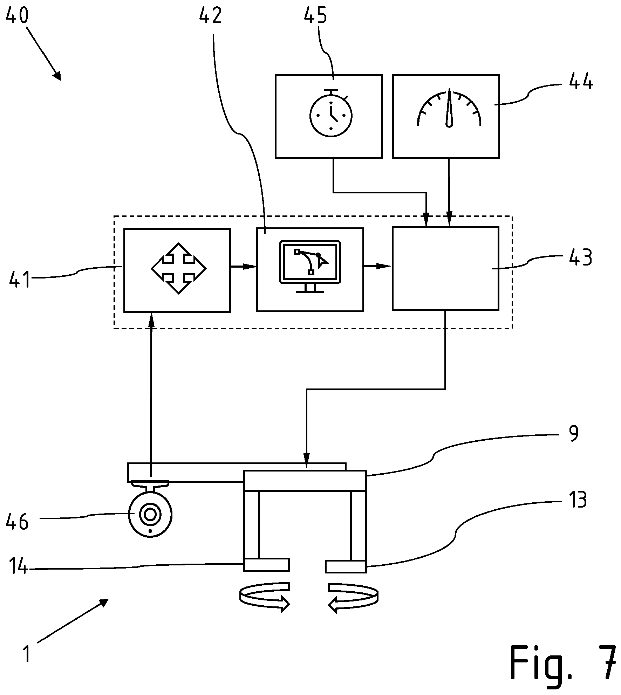

Fig. 7 zeigt in einer schematischen Darstellung die Verknüpfung des Arbeitsgeräts 10 mit der Steuerungseinrichtung 40. Diese umfasst eine Bildkorrektureinheit 41, mit der insbesondere eine Stauchung oder Dehnung des von der Kamera 46 aufgenommenen und in einer Bilddatei gespeicherten Sichtbereichs in zumindest in einer Dimension vorgenommen werden kann. Das so korrigierte Bild wird in einer Bilderkennungseinrichtung 42 auf das Vorhandensein linearer Strukturen überprüft. Wird eine solche erkannt, werden über eine Schalteinheit 43 die Stellglieder betätigt, um den Verbindungsautomat 13 und das Gegenstück 14 zueinander zu bewegen und die Verbindung der Schnurelemente auszuführen. Diese Steuerungseinrichtung 40 umfasst außerdem einen Geschwindigkeitsgeber 44 und einen Zeitgeber 45, so dass über die Verknüpfung von Zeit und Geschwindigkeit eine Wegstrecke des Arbeitsfahrzeugs 20 und des damit verbundenen Laubhefters 1 bestimmbar ist.

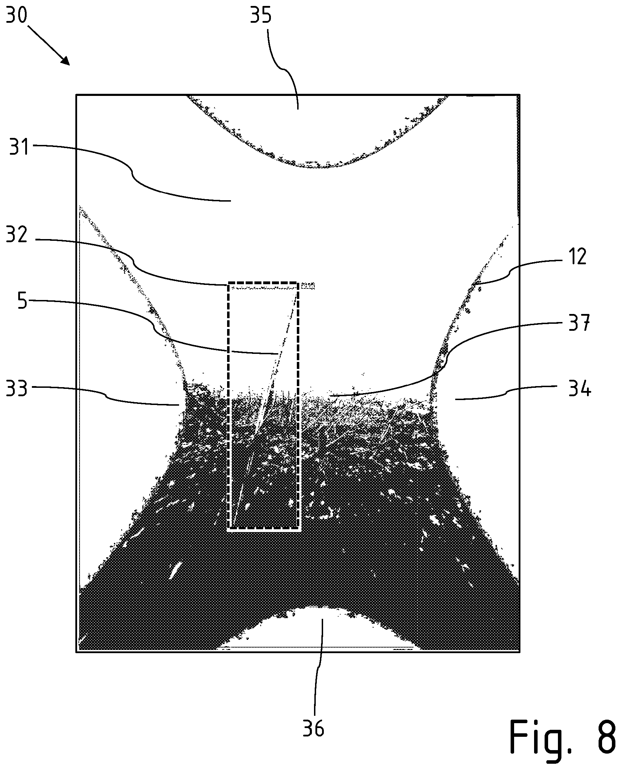

Fig. 8 gibt den Inhalt einer elektronischen Bilddatei 30 wieder, die von der Kamera 46 aufgenommen wurde. Der Bildbereich 31 ist durch horizontale und vertikale Stauchungszonen 33, 34, 35, 36 so korrigiert worden, dass z. B. ein Bildhorizont 37 gerade verläuft. Dadurch kann ein Stickel 5 als eine lineare Struktur erkannt werden, der hier mit einer Markierung 32 als von der Bilderkennungseinrichtung 42 erkannte lineare Struktur gekennzeichnet ist.

Die Position des erkannten Stickels wird genutzt, um die im Voraus als Programm in der Steuerungseinrichtung hinterlegte Abfolge von Verbindungspositionen nachzujustieren:
Die Abfolge von Verbindungspositionen ist dazu zweckmäßigerweise auf die vertikalen Stickel 55 (siehe Figur 5) bezogen, wie auch oben bereits beschrieben. Das heißt, mit dem Stickel 55 als Referenzmarke werden die Vor-Stickel-Verbindungsposition 62 und die Nach-Stickel-Verbindungsposition 63 festgelegt und die von diesem ausgehend mit dem halben Abstand A₁ auch die Zwischen-Stickel-Verbindungsposition 64. Wenn nun das Arbeitsfahrzeug 20 mit dem Laubhefter 1 entlang der Zeile 51 fährt, wird der Sichtbereich davor elektronisch aufgenommen und analysiert. Zwar sind im Voraus die X-Koordinaten für jede Verbindungsposition bereits rechnerisch bestimmt worden, wie in Figur 6 dargestellt. Mit dem per Bilderkennung erkannten Stickel kann in der Steuerungseinrichtung eine Prüfung ausgelöst werden, inwieweit die theoretisch im Voraus bestimmten Koordinaten des nächstfolgenden Stickels mit der real erkannten Position übereinstimmt, wobei für die Position im Allgemeinen die sich in Fahrtrichtung F erstreckende X-Koordinate ausreichend ist. Ist die Differenz zwischen der vorbestimmten und der erkannten Position größer als ein festgelegter Toleranzwert, so nimmt die Steuerungseinrichtung eine Neuberechnung aller nachfolgenden Verbindungspositionen anhand des Differenzwertes vor. Somit findet eine laufende Anpassung der theoretisch im Voraus festgelegten Abfolge von Verbindungspositionen an die realen Gegebenheiten in der konkret bearbeiteten Zeile im Weinberg statt. Sinnvoll ist es, für jede bearbeitete Zeile einen Speicherplatz in der Steuerungseinrichtung anzulegen und die theoretisch bestimmten Positionen darin durch die real erkannten Positionen zu ersetzen. zusätzlich können einzelne manuelle Verbindungen, die vom Bediener ausgelöst werden, mit registriert werden und stehen für spätere Durchläufe zur Verfügung.

In gleicher Weise wie annähernd lotrecht ausgerichtete Stickel 55 als Referenzmarken herangezogen werden können, um über eine Bildererkennung eine Nachjustierung zu veranlassen, können mittels der beschriebenen Bilderkennung auch Hindernisse erkannt werden, um Hindernispositionen zu definieren und den Verbindungsvorgang im Bereich der Hindernispositionen zu sperren. Bei den Hindernissen kann es sich z.B. um umgestürzte, geknickte oder schräg stehende Stickel handeln.

### Bezugszeichenliste

- 1: Laubhefter
- 2: Schnurelement
- 3: Aufrichtsystem
- 4: Verbindungsvorrichtung
- 5: Erkennungseinrichtung
- 7: Sensor
- 9: Basiselement
- 10: Hubmast
- 11: erster Verbindungsarm
- 12: zweiter Verbindungsarm
- 13: Verbindungsautomat
- 14: Gegenstück
- 15: erste Schnurelementführung
- 16: zweite Schnurelementführung
- 17: erstes Stellglied
- 18: zweites Stellglied
- 19: Behälter
- 20: Fahrzeug

- 40: Steuerungseinrichtung
- 41: Bildkorrektureinheit
- 42: Bilderkennungseinrichtung
- 43: Schalteinheit
- 44: Geschwindigkeitsgeber
- 45: Zeitgeber
- 46: Kamera

- 30: elektronische Bilddatei
- 31: Bildbereich
- 32: Markierung
- 33, 34, 35, 36: horizontale und vertikale Stauchungszonen
- 37: Bildhorizont

- 50: Weinberg
- 51, 51': Zeile
- 52: Arbeitsgang
- 53: Rebstöcke
- 54: Anfangsstickel
- 55: Stickel

- 60: Verbindungspositionen
- 61: Startverbindungsposition
- 62: Vor-Stickel-Verbindungposition
- 63: Nach-Stickel-Verbindungposition
- 64: Zwischen-Stickel-Verbindungposition
- F: Fahrtrichtung
- H: Höhenrichtung
- B: Breitenrichtung
- L: Längsrichtung

- A₀, A₁: Abstände
- x₀, x₁, x₂₁,:
- x₂₂, x₂₃, x₃₁,:
- x₃₂, x₃₃, x₄₁,:
- x₄₂, x₄₃, x₅₁: x-Koordinaten

## Patentansprüche

1. Laubhefter (1) zum Aufrichten und Binden von Trieben von in einer linearen Zeile (51, 51') angeordneten Pflanzen, wenigstens umfassend:
- eine an einem Arbeitsfahrzeug (20) anbringbare Haltevorrichtung (11), mit der die Zeile (51, 51') übergreifbar ist;
- ein Aufrichtsystem (3) zum Aufrichten von aus der Zeile (51, 51') herausragenden Pflanzentrieben, wobei an beiden Seiten der Zeile (51, 51') wenigstens ein Teil des Aufrichtsystems (3) angeordnet ist;
- eine Schnurführungseinrichtung, von der wenigstens je ein Schnurelement (2) zum Zurückhalten der Triebe der Pflanzen in einer Laubwand auf jeder Seite der Zeile (51, 51') abspulbar ist;
- eine Verbindungsvorrichtung (4), welche dazu vorgesehen und ausgebildet ist, einen Verbindungsvorgang zum Verbinden der beidseits der Zeile (51, 51') geführten Schnurelemente (2) durchzuführen,
**dadurch gekennzeichnet, dass** der Laubhefter (1) eine Steuereinheit (40) umfasst, welche dazu vorgesehen und ausgebildet ist,
- geeignete Verbindungspositionen (61, 62, 63, 64) in der Zeile (51, 51'), die sich in Fahrtrichtung (F) vor dem Arbeitsfahrzeug (20) befinden, zu identifizieren und an den identifizierten Verbindungspositionen (61, ..., 64) die Verbindungsvorrichtung (4) derart zu betätigen, dass ein automatischer Verbindungsvorgang der Schnurelemente (2) ausgeführt wird
und/oder
- ein Programm mit einer Abfolge von Verbindungspositionen (61, ..., 64) für die jeweilige Zeile (51, 51') zu speichern, anhand wenigstens einer in der Zeile (51, 51') identifizierbaren Referenzmarke das Programm zu starten und bei Erreichen der jeweiligen Verbindungsposition (61, ..., 64) die Verbindungsvorrichtung (4) zu betätigen, **dadurch gekennzeichnet, dass** die Steuereinheit (40) wenigstens eine Erkennungseinrichtung (5) umfasst oder damit verbunden ist, wobei die Erkennungseinrichtung (5):
- wenigstens einen Sensor (7) zur Erkennung wenigstens einer Lücke in einem vor dem Laubhefter befindlichen Abschnitt der Laubwand umfasst und / oder
- dazu vorgesehen und ausgebildet ist, ein in der Zeile (51, 51') vorhandenes Hindernis für die Verbindungsvorrichtung (4) zu erkennen und einen Verbindungsvorgang auf Höhe des Hindernisses zu verhindern.

2. Laubhefter (1) nach Anspruch 1, **dadurch gekennzeichnet, dass** die Erkennungseinrichtung (5) in Fahrtrichtung (F) gesehen vor der Verbindungsvorrichtung (4) angeordnet ist.

3. Laubhefter (1) nach Anspruch 1 oder 2, **dadurch gekennzeichnet, dass** der Sensor ein Bildsensor ist und dass die Erkennungseinrichtung (5) wenigstens eine Bilderkennungseinrichtung (43) zur Erkennung einer Lücke in der Zeile (51; 51') mittels der von dem Bildsensor aufgenommenen Bilddaten umfasst.

4. Laubhefter (1) nach wenigstens einem der vorhergehenden Ansprüche1 bis 3, **dadurch gekennzeichnet, dass** der Sensor (7) auf einer ersten Seite der Zeile (51, 51') angeordnet ist und auf einer zweiten Seite der Zeile, dem Sensor (7) gegenüberliegend, ein blickdichtes Element im Erfassungsbereich des Sensors (7) angeordnet ist.

5. Laubhefter (1) nach einem der vorhergehenden Ansprüche, **dadurch gekennzeichnet, dass** die Steuereinheit (40) eine Speichereinrichtung umfasst, in der geeignete Verbindungspositionen (61,... ,64) und/oder Hindernispositionen in der Zeile (51; 51') hinterlegbar sind.

6. Laubhefter (1) nach Anspruch 5, **dadurch gekennzeichnet, dass** die Steuereinheit (40) ein Bedienerinterface umfasst, durch welche in der Steuereinheit (40) wenigstens eine Referenzmarke zur Festlegung einer ersten Verbindungsposition (61) und wenigstens ein Abstandswert (A₀, A1) oder mehrere Koordinaten (x₀... x₅₁) zur Festlegung weiterer nachfolgender Verbindungspositionen (62, 63, 64) hinterlegbar ist.

7. Laubhefter (1) nach Anspruch 6, **dadurch gekennzeichnet,**
- **dass** der Laubhefter (1) wenigstens einen Positionssensor oder einen Weggeber aufweist oder damit verbunden, der mit der Steuereinheit (40) verbunden ist und
- **dass** die Steuereinheit (40) ausgebildet ist, um einen fortwährenden Vergleich der durch den Positionssensor oder den Weggeber bestimmten Position des Laubhefters (1) in der Zeile (51, 51') mit den in der Speichereinrichtung hinterlegten Verbindungspositionen (61, ...,64) und/oder Hindernispositionen durchzuführen und bei Erreichen einer Verbindungsposition (61, ...,64) einen Verbindungsvorgang auszulösen und bei Erreichen einer Hindernispositionen jeden Verbindungsvorgang zu unterbinden.

8. Verfahren zum Aufrichten und Binden von Trieben von in einer linearen Zeile (51, 51') angeordneten Pflanzen,
unter Verwendung eines Laubhefters (1), der ein Aufrichtsystem (3) zum Aufrichten der Triebe und eine Verbindungsvorrichtung (4) zum Verbinden zweier Schnurelemente (2) umfasst und an einem Arbeitsfahrzeug (20) angebracht ist, wobei das Verfahren wenigstens die folgenden Schritte umfasst:
a) Fahren des Arbeitsfahrzeugs (20) mit dem Laubhefter (1) entlang der Zeile (51; 51') und dabei Einbringen und/oder Führen von je wenigstens einem Schnurelement (2) auf beiden Seiten der in der Zeile (51, 51') angeordneten Pflanzen;
b) Verbinden der Schnurelemente (2) mittels Verbindungselementen an mehreren Verbindungspositionen (61, ..., 64); wobei geeignete Verbindungspositionen (61, 62, 63, 64) in der Zeile (51, 51'), die sich in Fahrtrichtung (F) vor dem Arbeitsfahrzeug (20) befinden, während der Fahrt des Arbeitsfahrzeugs identifiziert werden und die Schnurelemente (2) an den identifizierten Verbindungspositionen (61, ..., 64) unmittelbar verbunden werden,
und/oder die Schnurelemente (2) jeweils bei Erreichen von Verbindungspositionen (61, ..., 64) verbunden werden, die in einer Abfolge von Verbindungspositionen (61, ..., 64) für die jeweilige Zeile (51, 51') vorbestimmt sind,
**dadurch gekennzeichnet, dass** wenigstens eine geeignete Verbindungsposition (61, 62, 63, 64) mittels einer Steuereinheit (40) identifiziert wird, die wenigstens eine Erkennungseinrichtung (5) umfasst oder damit verbunden ist, wobei:
- die Erkennungseinrichtung (5) wenigstens einen Sensor (7) zur Erkennung wenigstens einer Lücke in einer Laubwand in einem vor dem Laubhefter (1) befindlichen Abschnitt der Zeile (51, 51') umfasst und/oder
- mittels der Erkennungseinrichtung (5) ein in der Zeile (51, 51') vorhandenes Hindernis für die Verbindungsvorrichtung (4) erkannt wird und die Verbindungsvorrichtung (4) bis nach dem Passieren des Hindernisses gesperrt wird.

9. Verfahren nach Anspruch 8, **dadurch gekennzeichnet, dass** der Sensor (7) in Fahrtrichtung (F) gesehen vor der Verbindungsvorrichtung (4) angeordnet ist oder nach dorthin sein Erfassungsbereich ausgerichtet ist.

10. Verfahren nach Anspruch 8 oder 9, **dadurch gekennzeichnet, dass** der Sensor ein Bildsensor ist und dass die Erkennungseinrichtung (5) wenigstens eine Bilderkennungseinrichtung (42) zur Erkennung einer Lücke in der Zeile (51; 51') mittels der von dem Bildsensor aufgenommenen Bilddaten umfasst.

11. Verfahren nach wenigstens einem der Ansprüche 8 bis 10, **dadurch gekennzeichnet, dass** der Sensor (7) auf einer ersten Seite der Zeile (51, 51') angeordnet ist und auf einer zweiten Seite der Zeile, dem Sensor (7) gegenüberliegend, ein blickdichtes Element im Erfassungsbereich des Sensors (7) angeordnet ist.

12. Verfahren nach wenigstens einem der Ansprüche 8 bis 11, **dadurch gekennzeichnet, dass** die Abfolge von Verbindungspositionen (61, ..., 64) in der Steuereinheit (40) vor und/oder während der Fahrt des Arbeitsfahrzeugs (20) entlang der Zeile (51, 51') automatisch berechnet wird, wobei von einem Bediener zuvor in der Steuereinheit (40) hinterlegt wird:
- wenigstens eine Referenzmarke zur Festlegung einer ersten Verbindungsposition (61) in der Zeile (51);
- wenigstens je ein relativ zur Referenzmarke gemessener Abstandswert (A₀, A₁) für Beginn und Länge einer wiederkehrenden Abfolge von Verbindungspositionen (62, 63, 64) oder mehrere Koordinaten (x₀... x₅₁) zur Festlegung weiterer nachfolgender Verbindungspositionen (62, 63, 64).

13. Verfahren nach Anspruch 12, **dadurch gekennzeichnet, dass**
- als Referenzmarke für den Beginn einer wiederkehrenden Abfolge gleichartiger Verbindungspositionen (62, 63, 64) ein in der Zeile (51) stehender Stickel (55) gewählt wird,
- dass mittels einer elektronischen Kamera der Sichtbereich vor dem Laubhefter (1) fortlaufend erfasst wird und die elektronischen Bilddaten in einer Bilderkennungseinrichtung (42) auf das Vorhandensein einer einem Stickel (55) entsprechenden linearen Struktur geprüft werden, und
- dass in der Steuerungseinrichtung (40) bei Erkennen einer linearen Struktur die Verbindungspositionen (62, 63, 64) anhand der Position des jeweils in der Zeile (51; 51') erkannten Stickels (55) nachjustiert wird.

## Claims

1. Shoot binder (1) for straightening and tying shoots of plants arranged in a linear row (51, 51'), at least comprising:
- a holding device (11), which can be attached to a working vehicle (20) and can reach over the row (51, 51');
- a straightening system (3) for straightening plant shoots protruding from the row (51, 51'), wherein on both side of the row (51, 51') there is arranged at least part of the straightening system (3);
- a twine guiding device, from which at least one respective twine element (2) can be unwound on each side of the row (51, 51') for restraining the shoots of the plants in a canopy;
- a connecting device (4), which is intended and designed to carry out a connecting operation for connecting the twine elements (2) guided on both sides of the row (51, 51'),
- wherein the shoot binder (1) comprises a control unit (40), which is intended and designed
- to identify suitable connection positions (61, 62, 63, 64) in the row (51, 51') that are located in front of the work vehicle (20) in the direction of travel (F) and to actuate the connecting device (4) at the identified connection positions (61, ..., 64) in such a way that an automatic connecting operation for the twine elements (2) is executed and/or
and/or
- to store a program with a sequence of connection positions (61, ..., 64) for the respective row (51, 51'), to start the program on the basis of at least one reference mark identifiable in the row (51, 51') and to actuate the connecting device (4) when the respective connection position (61, ..., 64) is reached, **characterized in that** the control unit (40) comprises or is connected to at least one detection device (5), wherein the detection device (5) comprises:
- at least one sensor (7) for detecting at least one gap in a section of the canopy located in front of the shoot binder and/or
- is intended and designed to detect an obstacle in the way of the connecting device (4) in the row (51, 51') and to prevent a connecting operation near the obstacle.

2. Shoot binder (1) according to Claim 1, **characterized in that** the detection device (5) is arranged in front of the connecting device (4) as viewed in the direction of travel (F).

3. Shoot binder (1) according to Claim 1 or 2, **characterized in that** the sensor is an image sensor and **in that** the detection device (5) comprises at least one image detection device (43) for detecting a gap in the row (51; 51') by means of the image data recorded by the image sensor.

4. Shoot binder (1) according to at least one of the preceding Claims 1 to 3, **characterized in that** the sensor (7) is arranged on a first side of the row (51, 51') and an opaque element is arranged in the detection range of the sensor (7) on a second side of the row, opposite the sensor (7).

5. Shoot binder (1) according to one of the preceding claims, **characterized in that** the control unit (40) comprises a memory device in which suitable connection positions (61, ..., 64) and/or obstacle positions in the row (51; 51') are stored.

6. Shoot binder (1) according to Claim 5, **characterized in that** the control unit (40) comprises an operator interface via which at least one reference mark for determining a first connection position (61) and at least one distance value (A0, A1) or several coordinates (x0... x51) for determining further subsequent connection positions (62, 63, 64) can be stored in the control unit (40).

7. Shoot binder (1) according to Claim 6, **characterized**
- **in that** the shoot binder (1) has or is connected to at least one position sensor or a displacement sensor which is connected to the control unit (40) and
- **in that** the control unit (40) is designed to carry out an ongoing comparison of the position of the shoot binder (1) in the row (51, 51') determined by the position sensor or the displacement sensor with the connection positions (61, ..., 64) and/or obstacle positions stored in the memory device and to trigger a connecting operation when a connection position (61, ..., 64) is reached and prevent any connecting operation when an obstacle position is reached.

8. Method for straightening and tying shoots of plants arranged in a linear row (51, 51'),
using a shoot binder (1), which comprises a straightening system (3) for straightening the shoots and a connecting device (4) for connecting two twine elements (2) and is attached to a work vehicle (20), wherein the method comprises at least the following steps:
a) driving the work vehicle (20) with the shoot binder (1) along the row (51; 51') and at the same time inserting and/or guiding at least one twine element (2) on both sides of the plants arranged in the row (51; 51');
b) connecting the twine elements (2) by means of connecting elements at several connection positions (61, ..., 64); wherein
suitable connection positions (61, 62, 63, 64) in the row (51, 51') that are located in front of the work vehicle (20) in the direction of travel (F) are identified, while the work vehicle is driving along and the twine elements (2) are directly being connected at the identified connection positions (61, ..., 64) and/or the twine elements (2) are connected in each case when connection positions (61, ..., 64) which are predetermined in a sequence of connection positions (61, ..., 64) for the respective row (51, 51')are reached,
**characterized in that** at least one suitable connection position (61, 62, 63, 64) is identified by means of a control unit (40), which comprises or is or connected to at least one detection device (5), wherein:
- the detection device (5) comprises at least one sensor (7) for detecting at least one gap in a canopy in a section of the row (51, 51') located in front of the shoot binder (1) and/or
- an obstacle in the way of the connecting device (4) in the row (51, 51') is detected by means of the detection device (5) and the connecting device (4) is disabled until the obstacle has been passed.

9. Method according to Claim 8, **characterized in that** the sensor (7) is arranged in front of the connecting device (4) as viewed in the direction of travel (F) or its detection range is directed towards it.

10. Method according to Claim 8 or 9, **characterized in that** the sensor is an image sensor and **in that** the detection device (5) comprises at least one image detection device (42) for detecting a gap in the row (51, 51') by means of the image data recorded by the image sensor.

11. Method according to at least one of Claims 8 to 10, **characterized in that** the sensor (7) is arranged on a first side of the row (51, 51') and an opaque element is arranged in the detection range of the sensor (7) on a second side of the row, opposite the sensor (7).

12. Method according to at least one of Claims 8 to 11, **characterized in that** the sequence of connection positions (61,..., 64) is automatically calculated in the control unit (40) before and/or while the work vehicle (20) is driving along the row (51, 51'), wherein the following is previously stored in the control unit (40) by an operator:
- at least one reference mark for determining a first connection position (61) in the row (51);
- at least one distance value (A₀, A₁), measured relative to the reference mark, for the beginning and length of a recurring sequence of connection positions (62, 63, 64) or several coordinates (x₀... x₅₁) for determining further subsequent connection positions (62, 63, 64).

13. Method according to Claim 12, **characterized in that**
- a stake (55) standing in the row (51) is chosen as the reference mark for the beginning of a recurring sequence of similar connection positions (62, 63, 64),
- **in that** the field of view in front of the shoot binder (1) is recorded on an ongoing basis by means of an electronic camera and the electronic image data are checked in an image detection device (42) for the presence of a linear structure corresponding to a stake (55), and
- **in that**, when a linear structure is detected, the connection positions (62, 63, 64) are readjusted in the control device (40) on the basis of the position of the respective stake (55) detected in the row (51; 51').

## Revendications

1. Releveuse-palisseuse (1) destinée à redresser et à lier des pousses de plantes disposées en un rang linéaire (51, 51'), comprenant au moins :
- un dispositif de retenue (11) pouvant être installé sur un engin de travail (20), qui s'étend sur le rang (51, 51') ;
- un système de redressement (3) destiné à redresser des pousses de plantes dépassant du rang (51, 51'), au moins une partie du système de redressement (3) étant disposée de part et d'autre du rang (51, 51');
- un équipement de guidage de ficelle, duquel au moins un élément de ficelle (2) respectif peut être déroulé de chaque côté du rang (51, 51') pour retenir les pousses des plantes dans un mur de feuilles ;
- un dispositif de liaison (4), qui est prévu et réalisé pour effectuer une opération de liaison destinée à relier les éléments de ficelle (2) guidés de part et d'autre du rang (51, 51'),
- dans laquelle la releveuse-palisseuse (1) comprend une unité de commande (40) qui est prévue et réalisée
- pour identifier des positions de liaison (61, 62, 63, 64) appropriées dans le rang (51, 51'), qui se trouvent devant l'engin de travail (20) dans la direction de déplacement (F), et pour actionner le dispositif de liaison (4) sur les positions de liaison (61, ..., 64) identifiées de manière à exécuter une opération de liaison automatique des éléments de ficelle (2)
- et/ou
- pour stocker un programme avec une séquence de positions de liaison (61, ..., 64) pour le rang (51, 51') concerné, pour démarrer le programme à l'aide d'au moins une marque de référence identifiable dans le rang (51, 51') et pour actionner le dispositif de liaison (4) lorsque la position de liaison (61, ..., 64) concernée est atteinte, **caractérisée en ce que** l'unité de commande (40) comprend au moins un équipement de reconnaissance (5) ou est reliée à celui-ci, l'équipement d'identification (5) :
- comprenant au moins un capteur (7) destiné à identifier au moins un espacement dans une portion du mur de feuilles se trouvant devant la releveuse-palisseuse et/ou
- étant prévu et réalisé pour identifier un obstacle pour le dispositif de liaison (4) présent dans le rang (51, 51') et pour empêcher une opération de liaison à hauteur de l'obstacle.

2. Releveuse-palisseuse (1) selon la revendication 1, **caractérisée en ce que** l'équipement d'identification (5) est disposé devant le dispositif de liaison (4) vu dans la direction de déplacement (F).

3. Releveuse-palisseuse (1) selon la revendication 1 ou 2, **caractérisée en ce que** le capteur est un capteur d'image, et que l'équipement d'identification (5) comprend au moins un équipement d'identification d'image (43) destiné à identifier un espacement dans le rang (51 ; 51') au moyen des données d'image relevées par le capteur d'image.

4. Releveuse-palisseuse (1) selon au moins l'une quelconque des revendications précédentes 1 à 3, **caractérisée en ce que** le capteur (7) est disposé sur un premier côté du rang (51, 51') et un élément opaque est disposé dans la zone de détection du capteur (7) sur un deuxième côté du rang, en vis-à-vis du capteur (7).

5. Releveuse-palisseuse (1) selon l'une quelconque des revendications précédentes, **caractérisée en ce que** l'unité de commande (40) comprend un équipement de stockage, dans lequel des positions de liaison (61, ..., 64) appropriées et/ou des positions d'obstacle dans le rang (51 ; 51') peuvent être enregistrées.

6. Releveuse-palisseuse (1) selon la revendication 5, **caractérisée en ce que** l'unité de commande (40) comprend une interface utilisateur, par laquelle au moins une marque de référence destinée à fixer une première position de liaison (61) et au moins une valeur de distance (A₀, A₁) ou plusieurs coordonnées (x₀... x₅₁) destinées à fixer d'autres positions de liaison (62, 63, 64) suivantes peuvent être enregistrées dans l'unité de commande (40).

7. Releveuse-palisseuse (1) selon la revendication 6, **caractérisée en ce**
- **que** la releveuse-palisseuse (1) comporte au moins un capteur de position ou un capteur de déplacement ou est reliée à celui-ci, qui est relié à l'unité de commande (40), et
- **que** l'unité de commande (40) est réalisée pour effectuer une comparaison constante de la position, définie par le capteur de position ou le capteur de déplacement, de la releveuse-palisseuse (1) dans le rang (51, 51') aux positions de liaison (61, ..., 64) et/ou aux positions d'obstacle enregistrées dans l'équipement de stockage et pour déclencher une opération de liaison lorsqu'une position de liaison (61, ..., 64) est atteinte et empêcher toute opération de liaison lorsqu'une position d'obstacle est atteinte.

8. Procédé destiné à redresser et à lier des pousses de plantes disposées en un rang linéaire (51, 51') en utilisant une releveuse-palisseuse (1), qui comprend un système de redressement (3) destiné à redresser les pousses et un dispositif de liaison (4) destiné à relier deux éléments de ficelle (2) et qui est installée sur un engin de travail (20), le procédé comprenant au moins les étapes suivantes :
a) le déplacement de l'engin de travail (20) avec la releveuse-palisseuse (1) le long du rang (51 51') et l'introduction et/ou le guidage de respectivement au moins un élément de ficelle (2) de part et d'autre des plantes disposées dans le rang (51, 51') ;
b) la liaison des éléments de ficelle (2) au moyen d'éléments de liaison sur plusieurs positions de liaison (61, ..., 64) ;
des positions de liaison (61, 62, 63, 64) appropriées dans le rang (51, 51') étant identifiées, qui se trouvent devant l'engin de travail (20) dans la direction de déplacement (F) pendant le déplacement de l'engin de travail, et les éléments de ficelle (2) étant liés directement sur les positions de liaison (61, ..., 64) identifiées et/ou les éléments de ficelle (2) étant liés respectivement lorsque des positions de liaison (61, ..., 64) sont atteintes, qui sont prédéfinies dans une séquence de positions de liaison (61, ..., 64) pour le rang (51, 51') concerné,
**caractérisé en ce qu'**au moins une position de liaison (61, 62, 63, 64) appropriée est identifiée au moyen d'une unité de commande (40), qui comprend au moins un équipement d'identification (5) ou qui est reliée à celui-ci :
- l'équipement d'identification (5) comprenant au moins un capteur (7) destiné à identifier au moins un espacement dans un mur de feuilles dans une portion du rang (51, 51') se trouvant devant la releveuse-palisseuse (1) et/ou
- un obstacle présent dans le rang (51, 51') pour le dispositif de liaison (4) étant identifié au moyen de l'équipement d'identification (5) et le dispositif de liaison (4) étant verrouillé jusqu'à ce que l'obstacle ait été passé.

9. Procédé selon la revendication 8, **caractérisé en ce que** le capteur (7) est disposé devant le dispositif de liaison (4) vu dans la direction de déplacement (F) ou est orienté là vers sa zone de détection.

10. Procédé selon la revendication 8 ou 9, **caractérisé en ce que** le capteur est un capteur d'image, et que l'équipement d'identification (5) comprend au moins un équipement d'identification d'image (42) destiné à identifier un espacement dans le rang (51 ; 51') au moyen des données d'image relevées par le capteur d'image.

11. Procédé selon au moins l'une quelconque des revendications précédentes 8 à 10, **caractérisé en ce que** le capteur (7) est disposé sur un premier côté du rang (51, 51') et un élément opaque est disposé dans la zone de détection du capteur (7) sur un deuxième côté du rang, en vis-à-vis du capteur (7).

12. Procédé selon au moins l'une quelconque des revendications 8 à 11, **caractérisé en ce que** la séquence de positions de liaison (61, ..., 64) est automatiquement calculée dans l'unité de commande (40) avant et/ou pendant le déplacement de l'engin de travail (20) le long du rang (51, 51'), les éléments suivants étant enregistrés au préalable dans l'unité de commande (40) par un opérateur :
- - au moins une marque de référence destinée à fixer une première position de liaison (61) dans le rang (51) ;
- - au moins une valeur de distance (A0, A1) respective mesurée par rapport à la marque de référence pour le début et la longueur d'une séquence récurrente de positions de liaison (62, 63, 64) ou plusieurs coordonnées (x0... x51) destinées à fixer d'autres positions de liaison (62, 63, 64) qui suivent.

13. Procédé selon la revendication 12, caractérisé en ce
- qu'un piquet (55) situé dans le rang (51) est choisi en tant que marque de référence pour le début d'une séquence récurrente de positions de liaison (62, 63, 64) similaires,
- que la zone de vision devant la releveuse-palisseuse (1) est détectée en continu au moyen d'une caméra électronique et la présence d'une structure linéaire correspondant à un piquet (55) sur les données d'image électroniques est vérifiée dans un équipement d'identification d'image (42), et
- - que les positions de liaison (62, 63, 64) sont ajustées ultérieurement à l'aide de la position du piquet (55) identifié respectivement dans le rang (51 ; 51') dans l'équipement de commande (40) lorsqu'une structure linéaire est identifiée.
